# EUROPEAN PATENT APPLICATION

(11) **EP 1 736 240 A1**
(43) Date of publication of application: **27.12.2006**
(21) Application number: 05728416.8
(22) Date of filing: 05.04.2005
(51) Int. Cl.: B01J 35/02, B01D 39/14, B01J 27/18, F24F 1/00, F24F 7/08

(54) **CLEANING MATERIAL, AIR FILTER, AIR CONDITIONER, HEAT EXCHANGE ELEMENT, AND HEAT EXCHANGE UNIT**

(30) Priority: 15.04.2004 JP 2004120841
(71) Applicant: DAIKIN INDUSTRIES, LTD., Osaka-shi, Osaka 530-8323 (JP)
(72) Inventor: OKAMOTO, Yoshio c/o DAIKIN INDUSTRIES, LTD., Kusatsu-shi, Shiga 5258526 (JP); TAIRA, Shigeharu c/o DAIKIN INDUSTRIES, LTD., Kusatsu-shi, Shiga 5258526 (JP); KURODA, Tarou c/o DAIKIN INDUSTRIES, LTD., Kusatsu-shi, Shiga 5258526 (JP)
(74) Representative: Goddar, Heinz J.
(86) International application number: PCT/JP2005/006649
(87) International publication number: WO 2005/099899

(57) **Abstract**

It is an object of the present invention to provide a cleaning treatment material that exhibits cleaning capacity superior to that of a conventional photosemiconductor catalyst in a case wherein the weight of the cleaning treatment material that can support an air cleaning member is limited to a certain extent. The cleaning treatment material (847) is a mixture of a photosemiconductor catalyst (846) and an apatite (845), which has a photocatalytic function. Furthermore, the secondary particles of the photosemiconductor catalyst (846) are 0.1 to 1.0 µm in diameter. In addition, the secondary particles of the apatite (845) are 1 to 10 µm in diameter.

## Description

### TECHNICAL FIELD

The present invention relates to a cleaning treatment material, an air filter, an air conditioner, a heat exchange element, and a heat exchanging unit.

### BACKGROUND ART

Conventional examples of catalysts that can be cited as photosemiconductor catalysts include: metal oxides, as represented by, for example, titanium oxide, strontium titanate, zinc oxide, tungsten oxide, and iron oxide; carbonaceous photocatalysts, as represented by fullerenes, such as C₆₀; as well as nitrides and oxynitrides consisting of transition metals. If such a photosemiconductor catalyst is irradiated by light (for example, ultraviolet light) that has an energy greater than its band gap, then the electrons in the valence band are excited to the conduction band, and positive holes generate in the valence band, and electrons generate in the conductor. As a result, the oxidation reaction easily occurs on the valence band side, and a reduction reaction easily occurs on the conductor side. Furthermore, in this state, if air, water, and the like contact the surface of the photosemiconductor catalyst, then they cause a chemical reaction that generates active oxygen, such as OH-, O₂, O₂-, and H₂O₂. In turn, the active oxygen decomposes the various organic substances present in the vicinity of the photosemiconductor catalyst.

Incidentally, there is a problem in that the speed of the cleaning process is insufficient in certain fields because the ability of these photosemiconductor catalysts to actively adsorb the organic substances is inferior. To eliminate this problem, work is currently in progress to develop a catalyst with a photocatalytic function (hereinbelow, referred to as photocatalytic apatite) that strongly adsorbs organic substances by substituting some atoms of an apatite with other atoms (e.g., refer to Patent Document 1 and Patent Document 2); and, actually, the adsorption performance is improved.

### PATENT DOCUMENT 1

Japanese Published Unexamined Patent Application No. 2004-2176 (Page 8)

### PATENT DOCUMENT 2

Japanese Published Unexamined Patent Application No. 2001-302220

### DISCLOSURE OF THE INVENTION

### PROBLEMS SOLVED BY THE INVENTION

With present day particle size control technology, it is extremely difficult to make the specific surface area (surface area per unit weight) of a photosemiconductor catalyst apatite larger than that of a conventional photosemiconductor catalyst. Accordingly, if the speed of the cleaning process for a conventional photosemiconductor catalyst is compared with that for a photosemiconductor catalyst apatite of the same weight, then the latter is inferior to the former.

It is an object of the present invention to provide a cleaning treatment material that exhibits cleaning capacity that is superior to that of a conventional photosemiconductor catalyst.

### MEANS FOR SOLVING THE PROBLEMS

A cleaning treatment material according to a first aspect of the invention is a mixture of a photosemiconductor catalyst and an apatite that has a photocatalytic function. Furthermore, the secondary particles of the photosemiconductor catalyst are 0.1 to 1.0 µm in diameter. In addition, the secondary particles of the apatite that has a photocatalytic function are 1 to 10 µm in diameter. Furthermore, the "photosemiconductor catalyst" herein includes: metal oxides, as represented by, for example, titanium oxide, strontium titanate, zinc oxide, tungsten oxide, and iron oxide; carbonaceous photosemiconductor catalysts, as represented by fullerenes, such as C₆₀; nitrides and oxynitrides consisting of transition metals; and apatites that have a photocatalytic function. In addition, "apatites that have a photocatalytic function" herein are apatites wherein, for example, some of the calcium atoms of a calcium hydroxyapatite are substituted with titanium atoms using a technique such as ion exchange.

In this aspect of the invention, the cleaning treatment material is a mixture of the photosemiconductor catalyst and the apatite that has a photocatalytic function. Consequently, the small-sized secondary particles of the photosemiconductor catalyst enter the gaps between the large-sized secondary particles of the apatite that has a photocatalytic function. Accordingly, it is possible to create active sites for photocatalytic reaction similar to those of a conventional photosemiconductor catalyst. In addition, in this state, the apatite, which has a photocatalytic function, specifically adsorbs, for example, bacteria and viruses. As a result, the cleaning treatment material can exhibit cleaning capacity superior to that of a conventional photosemiconductor catalyst.

A cleaning treatment material according to a second aspect of the invention is a cleaning treatment material according to the first aspect of the invention, wherein 10-35 parts by weight of the apatite, which has a photocatalytic function, are mixed with 100 parts by weight of the photosemiconductor catalyst. In addition, the apatite, which has a photocatalytic function, is more preferably 15-35 parts by weight.

It was confirmed that the oxidative decomposition speed of the acetaldehyde by the photosemiconductor catalyst, which is 100 parts by weight and has secondary particles that are 0.1 to 1.0 µm in diameter, is approximately four times the oxidative decomposition speed of the acetaldehyde by the apatite that has a photocatalytic function, which is 100 parts by weight and has secondary particles that are 1 to 10 µm in diameter.

In this aspect of the invention, 10-35 parts by weight of the apatite that has a photocatalytic function, wherein secondary particles are 1 to 10 µm in diameter, are mixed with 100 parts by weight of the photosemiconductor catalyst, wherein the secondary particles are 0.1 to 1.0 µm in diameter, thereby producing the cleaning treatment material. This mixing ratio is derived from the oxidative decomposition speed ratio of the photosemiconductor catalyst to the apatite that has a photocatalytic function, and from the adsorption performance of the acetaldehyde by the apatite that has a photocatalytic function, and this mixing ratio yields a higher processing performance with respect to, for example, bacteria, viruses and the like, than the case wherein only the photosemiconductor catalyst is used. Accordingly, the cleaning treatment material exhibits a cleaning capacity superior to that of a conventional photosemiconductor catalyst.

A cleaning treatment material according to a third aspect of the invention is a cleaning treatment material according to the first or second aspect of the invention, wherein the photosemiconductor catalyst is titanium dioxide.

In this aspect of the invention, the photosemiconductor catalyst is titanium dioxide. The titanium dioxide has excellent cost performance among photosemiconductor catalysts. Consequently, the present invention can overcome the problems while suppressing cost increases.

A cleaning treatment material according to a fourth aspect of the invention is a cleaning treatment material according to the first or second aspect of the invention, wherein the apatite, which has a photocatalytic function, is titanium apatite. Furthermore, the "titanium apatite" herein is an apatite wherein some of the calcium atoms of, for example, calcium hydroxyapatite are substituted with titanium atoms by a technique, such as ion exchange.

In this aspect of the invention, the apatite that has a photocatalytic function is titanium apatite. The titanium apatite can be easily prepared from calcium hydroxyapatite using the ion exchange method, and is superior in that it has the best cost performance among apatites that have a photocatalytic function. Consequently, the present invention can overcome problems while suppressing cost increases.

An air filter according to the fifth aspect of the invention supports the cleaning treatment material according to any one aspect of the first through fourth aspects of the invention.

In this aspect of the invention, the air filter supports the cleaning treatment material according to any one aspect of the first through fourth aspects of the invention. Consequently, this air filter can exhibit a cleaning capacity superior to that of air filters that support a conventional photosemiconductor catalyst.

An air conditioner according to sixth aspect of the invention comprises an air filter according to the fifth aspect of the invention.

In this aspect of the invention, the air conditioner comprises an air filter according to the fifth aspect of the invention. Consequently, this air conditioner can exhibit a cleaning capacity superior to that of an air conditioner that uses a conventional photosemiconductor catalyst.

A heat exchange element according to the seventh aspect of the invention supports a cleaning treatment material according to any one aspect of the first through fourth aspects of the invention.

In this aspect of the invention, the heat exchange element supports a cleaning treatment material according to any one aspect of the first through fourth aspects of the invention. Consequently, this heat exchange element can exhibit a cleaning capacity superior to that of a heat exchange element that supports a conventional photosemiconductor catalyst.

A heat exchanging unit according to the eighth aspect of the invention comprises a heat exchange element according to the seventh aspect of the invention.

In this aspect of the invention, the heat exchanging unit comprises a heat exchange element according to the seventh aspect of the invention. Consequently, this heat exchanging unit can exhibit a cleaning capacity superior to that of a heat exchanging unit that uses a conventional photosemiconductor catalyst.

### EFFECTS OF THE INVENTION

The cleaning treatment material according to the first aspect of the invention can exhibit a cleaning capacity superior to that of a conventional photosemiconductor catalyst.

The cleaning treatment material according to the second aspect of the invention can exhibit a cleaning capacity superior to that of a conventional photosemiconductor catalyst.

The cleaning treatment material according to the third aspect of the invention can overcome the problems of the present invention while suppressing cost increases.

The cleaning treatment material according to the fourth aspect of the invention can overcome the problems of the present invention while suppressing cost increases.

The air filter according to the fifth aspect of the invention can exhibit a cleaning capacity superior to that of an air filter that supports a conventional photosemiconductor catalyst.

The air conditioner according to the sixth aspect of the invention can exhibit a cleaning capacity superior to that of an air conditioner that uses a conventional photosemiconductor catalyst.

The heat exchange element according to the seventh aspect of the invention can exhibit a cleaning capacity superior to that of a heat exchange element that supports a conventional photosemiconductor catalyst.

The heat exchanging unit according to the eighth aspect of the invention can exhibit a cleaning capacity superior to that of a heat exchanging unit that uses a conventional photosemiconductor catalyst.

### BRIEF DESCRIPTION OF THE DRAWINGS

FIG. 1 is an external oblique view of an air cleaner according to a first embodiment.
FIG. 2 is an exploded oblique view of filters and a ventilation mechanism.
FIG. 3(a) is an oblique view that shows the structure of an electrical discharge part on the airflow upstream side.
FIG. 3(b) is an oblique view that shows the shape of a streamer discharge electrode.
FIG. 3(c) is a top view layout drawing of the electrical discharge part.
FIG. 3(d) shows an aspect of streamer discharge.
FIG. 4 is a schematic block diagram of a control unit.
FIG. 5 is a detail drawing of a prefilter.
FIG 6 is a cross sectional enlarged view of a fiber that constitutes a net part of the prefilter.
FIG 7 is a partial side sectional view of a roll filter.
FIG 8 shows an air filter and fibers according to the present invention.
FIG 9 is an enlarged view of the fiber according to the present invention.
FIG 10 is a simplified view of an apparatus for manufacturing the fiber according to the present invention.
FIG. 11(a) is a cross sectional view of a discharge part.
FIG. 11(b) shows the shape of a discharge port.
FIG 12 is a graph that compares the photocatalytic activity of titanium dioxide and titanium apatite over the identical surface area.
FIG 13 is a graph that compares the photocatalytic activity of titanium dioxide and the titanium apatite of the same weight.
FIG. 14 is an enlarged view of the fiber according to a modified example (B).
FIG 15 is an external oblique view of an air conditioner according to a modified example (C).
FIG 16 is an oblique view that shows the internal structure of a total heat exchanging unit according to a second embodiment.
FIG 17 is a top view that shows the internal structure of the total heat exchanging unit according to the second embodiment.
FIG 18 is a side view that shows the internal structure of the total heat exchanging unit according to the second embodiment.
FIG 19 is an exploded oblique view that shows the internal structure of the total heat exchanging unit according to the second embodiment.
FIG. 20 is an oblique view of a partition plate.
FIG 21 is an oblique view of the partition plate.
FIG 22 is an oblique view that shows the structure of a heat exchange element.
FIG 23 is an external oblique view of a streamer discharger.

### EXPLANATION OF SYMBOLS

- 12: Heat exchange element
- 34: Plasma catalytic filter (air filter)
- 40: Air cleaner (air conditioner)
- 100: Total heat exchanging unit (heat exchanging unit)
- 847: Mixture (cleaning treatment material)

### BEST MODE FOR CARRYING OUT THE INVENTION

### <FIRST EMBODIMENT>

### (OVERALL CONSTITUTION OF AIR CLEANER)

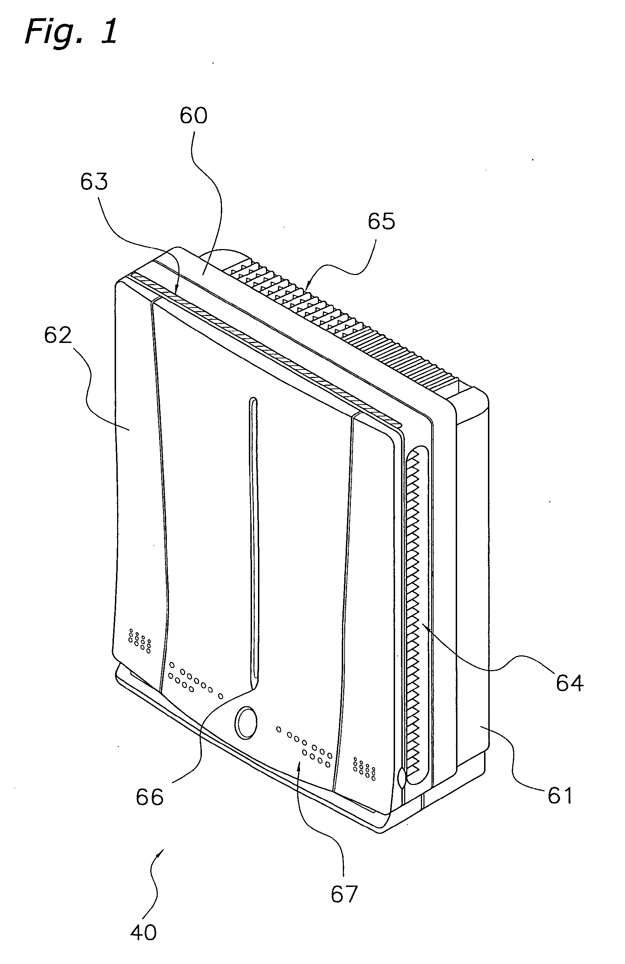

FIG 1 shows an external view of an air cleaner 40 that is used in one embodiment of the present invention.

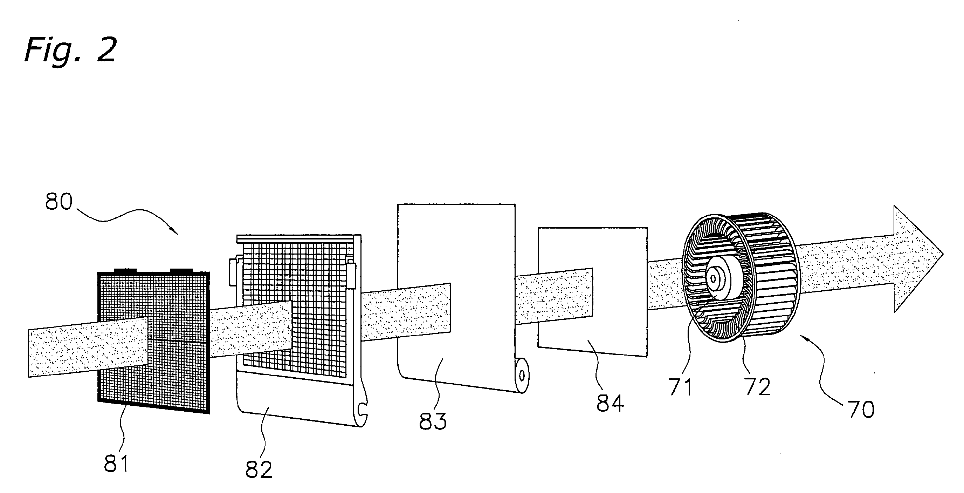

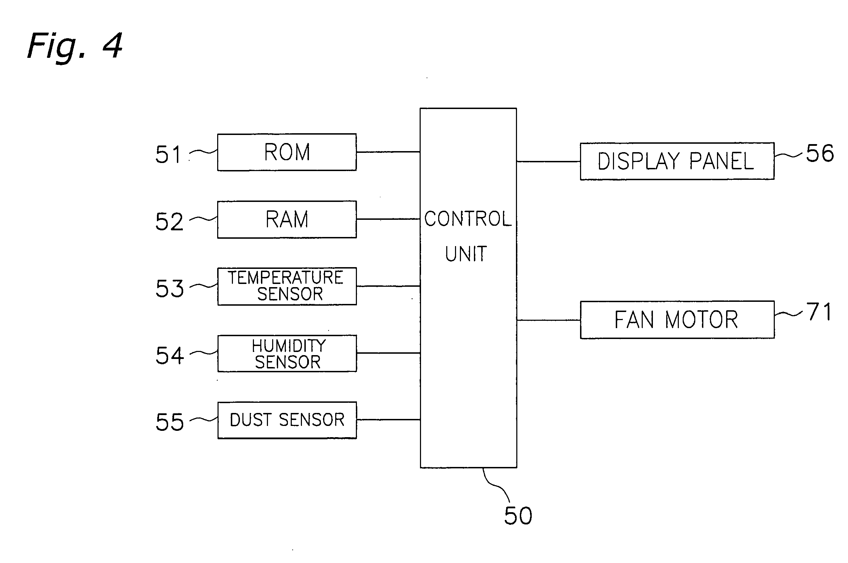

The air cleaner 40 maintains a comfortable room environment by purifying the indoor air of, for example, a building or a home, and then ventilating the indoor space with the purified air. The air cleaner 40 comprises a casing 60, a ventilation mechanism 70 (refer to FIG. 2), a control unit 50 (refer to FIG. 4), and a filter unit 80 (refer to FIG. 2).

### (CONSTITUENT ELEMENTS OF THE AIR CLEANER)

### (1) CASING

The casing 60 constitutes the outer surface of the air cleaner 40, and contains the ventilation mechanism 70, the control unit 50, and the filter unit 80. The casing 60 comprises a main body part 61 and a front panel 62.

### A. MAIN BODY PART

The main body part 61 comprises an upper surface suction port 63, side surface suction ports 64, and a blow out port 65. The upper surface suction port 63 and the side surface suction ports 64 are substantially rectangular openings that suction the indoor air into the air cleaner 40 in order to purify the indoor air therein. The upper surface suction port 63 is provided to the front surface side end part of the upper surface of the main body part 61, which is the same surface to which the blow out port 65 is provided. The side surface suction ports 64 are a pair of openings, wherein one is provided to the left side surface and the other is provided to the right side surface of the main body part 61. The blow out port 65 is provided on the rear surface side end part of the upper surface of the main body part 61. The blow out port 65 is an opening for blowing out the air from the air cleaner 40 to the indoor space after that air has been purified.

### B. FRONT PANEL

The front panel 62 is provided on the front side of the main body part 61, and covers the filter unit 80 that is installed inside the main body part 61. The front panel 62 comprises a front surface suction port 66 and a display panel opening 67. The front surface suction port 66 is a substantially rectangular opening that is provided at substantially the center part of the front panel 62 and suctions the indoor air into the air cleaner 40. The display panel opening 67 is provided so that a display panel 56, which is discussed later, is visible from outside of the casing 60.

### (2) VENTILATION MECHANISM

The ventilation mechanism 70 sucks in the indoor air via the suction ports (the upper surface suction port 63, the side surface suction ports 64, and the front surface suction port 66), and blows out air from the blow out port 65 after it has been purified. The ventilation mechanism 70 is provided on the inner side of the casing 60, and is constituted so that the indoor air that is suctioned in from the suction ports 63, 64, 66 passes through the filter unit 80. In addition, as shown in FIG. 2, the ventilation mechanism 70 comprises a fan motor 71 and a ventilation fan 72. The ventilation fan 72 is rotationally driven by the fan motor 71. An inverter motor, which is frequency controlled by an inverter circuit, is used as the fan motor 71. A centrifugal fan is used as the ventilation fan 72.

### (3) CONTROL UNIT

The air cleaner 40 further comprises the control unit 50, which comprises a microprocessor. As shown in FIG. 4, ROM 51, which stores, for example, a control program and various parameters, and RAM 52, which temporarily stores, for example, variables during processing, are connected to the control unit 50.

In addition, various sensors, such as a temperature sensor 53, a humidity sensor 54, and a dust sensor 55, are connected to the control unit 50, into which the detection signals from each sensor are inputted. The dust sensor 55 can measure the particle concentration of, for example, dust by irradiating the introduced air with light, which is scattered by smoke, dust, pollen, and other particles contained in the air, and detecting the amount of light that reaches a light receiving device.

Furthermore, the display panel 56 is connected to the control unit 50. The display panel 56 is constituted so that, for example, an operation mode, monitor information from various sensors, timer information, and maintenance information are displayed, and so that the operator can externally view such information via the display panel opening 67. In addition, it is possible to constitute the display panel 56 with a liquid crystal display panel, an LED, or other display elements, as well as a combination thereof.

Furthermore, the control unit 50 is connected to the fan motor 71, and can control the operation of these devices in accordance with, for example, the operation of the user and the detection result of the various sensors.

### (4) FILTER UNIT

The filter unit 80, which is provided inside the casing 60, eliminates fine particles contained in the indoor air that is suctioned in via the suction ports 63, 64, 66. As shown in FIG. 2, the filter unit 80 comprises a prefilter 81, an electrical discharge part 82, a photocatalytic filter 83, and a plasma catalytic filter 84. The filter unit 80 is constituted so that the indoor air that is suctioned in via the suction ports 63, 64, 66 passes through the interior of the filter unit 80, sequentially from the prefilter 81 to the electrical discharge part 82, the photocatalytic filter 83, and the plasma catalytic filter 84.

### A. PREFILTER

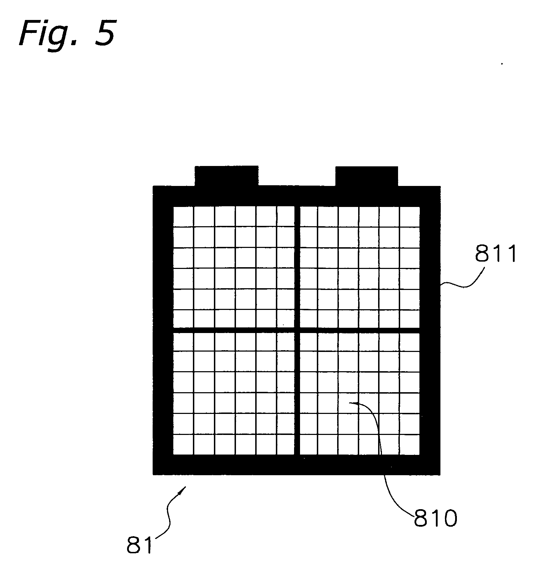

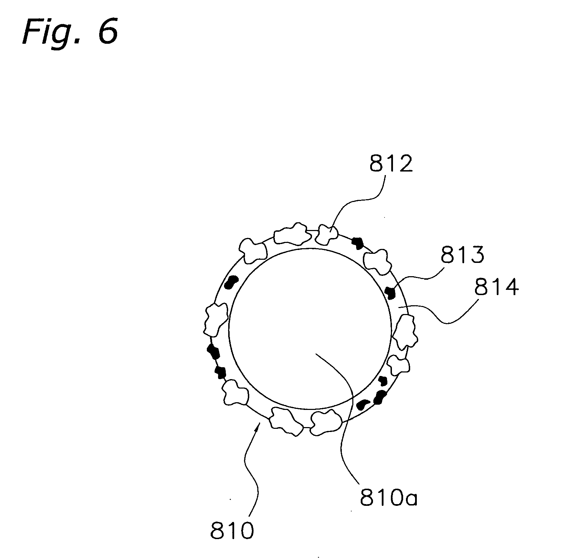

The prefilter 81 eliminates, for example, comparatively large particles of dust from the air that is suctioned into the casing 60 by the ventilation mechanism 70. The prefilter 81 comprises a net part 810 and a frame 811 (refer to FIG. 5). The net part 810, which is a filamentous resin net made of polypropylene (hereinafter, referred to as PP), whereto, for example, comparatively large particles of dust contained in the air suctioned into the casing 60 adhere. In addition, as shown in FIG. 6, the fiber that constitutes the net part 810 comprises a core 810a, which is made of PP, and an enveloping layer 814, which is made of the same PP. A visible light ray type photocatalyst 812 and a catechin 813 are supported on the enveloping layer 814 so that they are exposed to the air side. The visible light ray type photocatalyst 812 includes, for example, titanium oxide, wherein photocatalysis is activated by visible light, and eliminates viruses and bacteria, such as fungi and microbes contained in, for example, the dust that adheres to the net part 810. Catechin is one type of polyphenol and is a generic name for, for example, epicatechin, epigallocatechin, epicatechin gallate, and epigallocatechin gallate. Catechin deactivates viruses and suppresses the fertility of bacteria, such as fungi and microbes contained in, for example, the dust that adheres to the net part 810.

### B. ELECTRICAL DISCHARGE PART

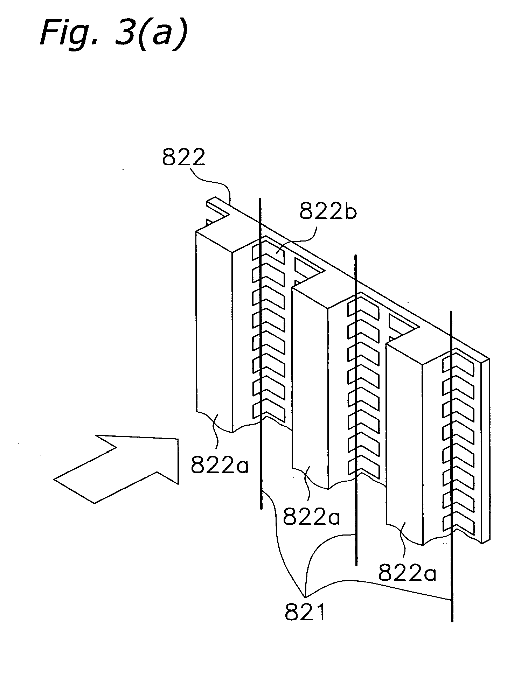

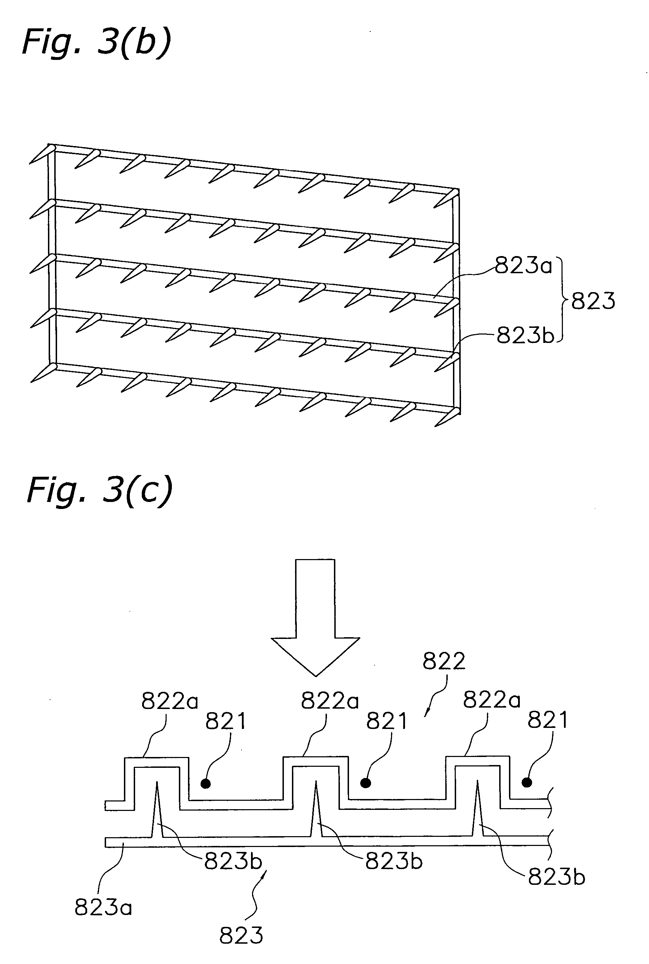

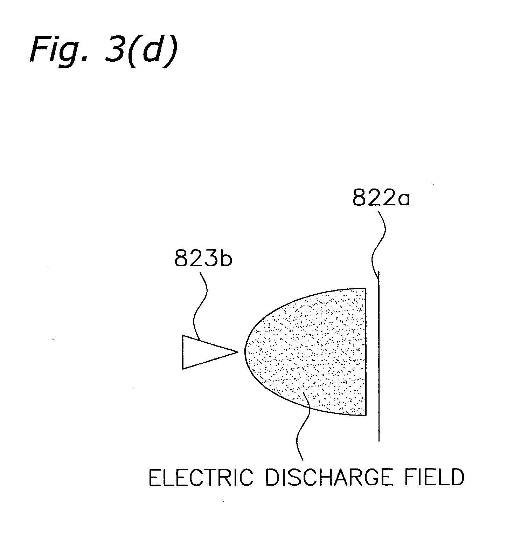

As shown in FIGS. 3(a), (b) and (c), the electrical discharge part 82 principally comprises an opposing electrode 822, ionization wires 821, and a streamer discharge electrode 823. The opposing electrode 822 is a metal plate that has a square wave shaped cross section, and comprises real electrode parts 822a, which function substantially as an electrode, and a plurality of slit parts 822b. Furthermore, the slit parts 822b serve to flow the air rearward. The ionization wires 821 are disposed on the airflow upstream side of the opposing electrode 822. Furthermore, at this point, one ionization wire 821 is disposed between each pair of adjacent real electrode parts 822a. In addition, each ionization wire 821 is formed from, for example, micro diameter tungsten wire, and is used as a discharge electrode. The streamer discharge electrode 823 comprises electrode rods 823a and needle electrodes 823b. Each needle electrode 823b is fixed so that it is substantially orthogonal to its corresponding electrode rod 823a. Furthermore, as shown in FIG. 3(c), the streamer discharge electrode 823 is disposed on the airflow downstream side of the opposing electrode 822. Furthermore, at this point, the streamer discharge electrode 823 is disposed so that each needle electrode 823b opposes one of the real electrode parts 822a of the opposing electrode 822.

Furthermore, the opposing electrode 822 and the ionization wires 821 of the electrodes 821, 822, 823 serve to charge the comparatively small particles of dust suspended in the air that passes through the prefilter 81. Moreover, the opposing electrode 822 and the streamer discharge electrode 823 serve to generate activators, which are supplied to a photosemiconductor catalyst supporting filter 831 (discussed later). The following discusses combinations of these electrodes in detail.

### (OPPOSING ELECTRODE AND IONIZATION WIRE)

When a high voltage is impressed between the ionization wires 821 and the real electrode parts 822a in the electrical discharge part 82, an electrical discharge is generated between the electrodes 821, 822. As a result, the dust and the like that pass between the electrodes 821, 822 are positively charged. Furthermore, the charged dust is supplied rearward via the slit parts 822b, and is electrostatically adsorbed to an electrostatic filter 830 (discussed later). In addition, at this time, the viruses, bacteria, and the like contained in the dust are also charged, which raises the efficiency at which titanium apatite (discussed later) adsorbs those viruses and bacteria.

### (OPPOSING ELECTRODE AND STREAMER DISCHARGE ELECTRODE)

If a discharge voltage of electricity that is, for example, direct current, alternating current, or pulsed is impressed between the streamer discharge electrode 823 and the opposing electrode 822 in the electrical discharge part 82, then a streamer discharge is generated between the electrodes 822, 823, as shown in FIG 3(d). Thus, if a streamer discharge is generated, a low temperature plasma is produced in the electrical discharge field. Furthermore, this low temperature plasma generates high speed electrons, ions, ozone, and radicals, such as hydroxy radicals, as well as excited molecules (such as excited oxygen, nitrogen, and water molecules). Furthermore, these activators are carried along with the airflow and are supplied to the photosemiconductor catalyst supporting filter 831.

Furthermore, these activators have extremely high energy levels and are capable of decomposing and deodorizing small organic molecules, such as ammonias, aldehydes, and nitrogen oxides contained in the air, even before they reach the photosemiconductor catalyst supporting filter 831.

### (C) PHOTOCATALYTIC FILTER

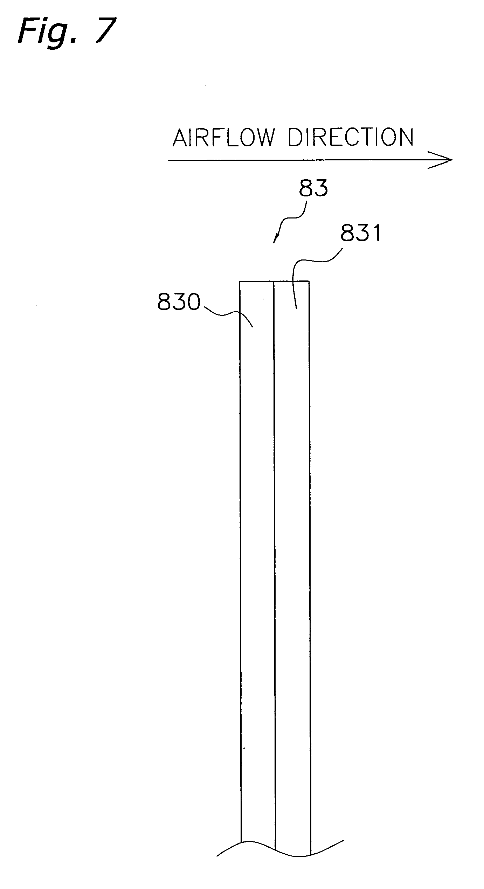

FIG 7 shows a partial cross sectional view of the photocatalytic filter 83. The photocatalytic filter 83 is a roll around which a length of filter material, in the amount of several uses worth, is wound, and is constituted so that if the surface in use becomes dirty, then the photocatalytic filter 83 can be pulled and the dirtied portion can then be cut off. The photocatalytic filter 83 is formed so that the electrostatic filter 830 and the photosemiconductor catalyst supporting filter 831 are laminated together. Furthermore, the photocatalytic filter 83 is disposed so that the electrostatic filter 830 faces the upstream side of the airflow produced by the ventilation mechanism 70 and so that the photosemiconductor catalyst supporting filter 831 faces the downstream side of the airflow. The dust and the like that were electrically charged by the electrical discharge part 82 are adsorbed to the electrostatic filter 830. The dust and the like that pass through the electrostatic filter 830 are adsorbed to the photosemiconductor catalyst supporting filter 831. The airflow downstream side surface of the photosemiconductor catalyst supporting filter 831 is coated with a mixture of titanium dioxide particles of the anatase form and titanium apatite particles. Furthermore, the titanium dioxide particles are 0.1 to 1.0 µm in diameter, and the titanium apatite particles are 1 to 10 µm in diameter. In addition, the mixture ratio by weight of the titanium dioxide and the titanium apatite is 100:20. Furthermore, the titanium apatite is an apatite wherein some of the calcium atoms of calcium hydroxyapatite are substituted with titanium atoms by a technique such as ion exchange.

### D. PLASMA CATALYTIC FILTER

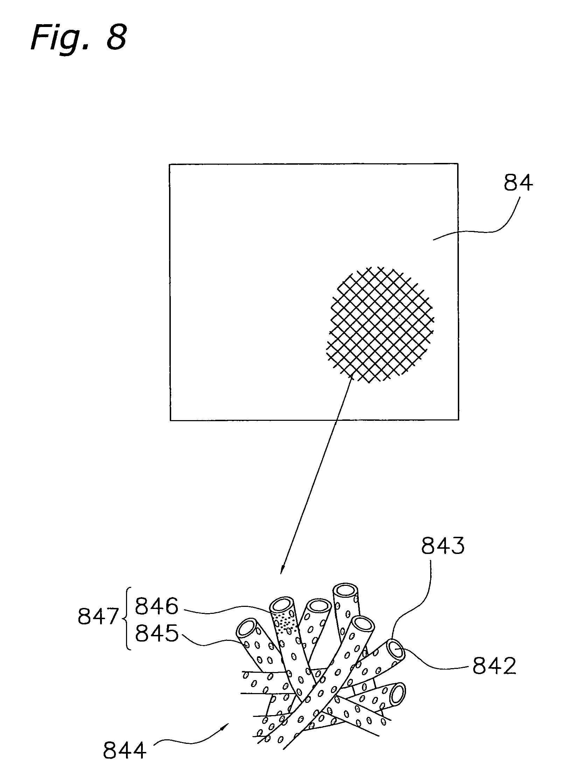

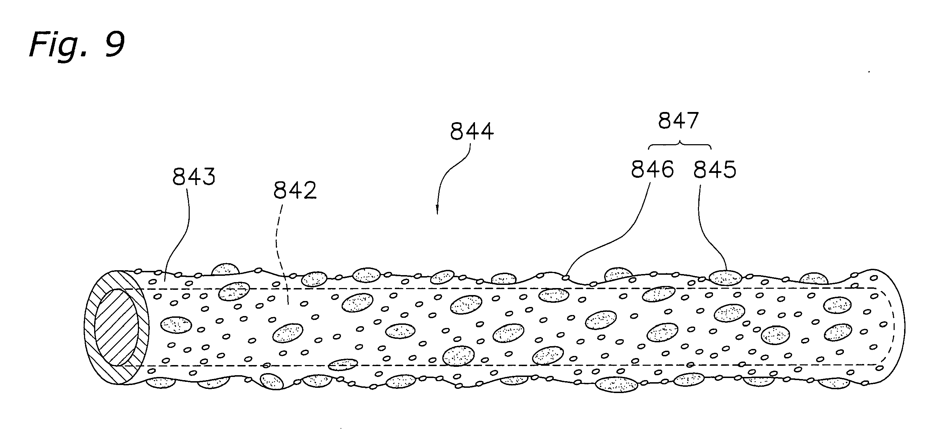

As shown in FIG 8 and FIG 9, the plasma catalytic filter 84 is formed from PP fibers 844, upon which a mixture 847 of titanium dioxide particles 846 of the anatase form and titanium apatite particles 845 is supported. Furthermore, similar to the prefilter 81, each fiber 844 comprises a core 842 and an enveloping layer 843, and the mixture 847 is supported on the enveloping layer 843. In addition, the titanium dioxide particles 846 are 0.1 to 1.0 µm in diameter, and the titanium apatite particles 845 are 1 to 10 µm in diameter. In addition, the mixture ratio by weight of the titanium dioxide and the titanium apatite is 100:20. The plasma catalytic filter 84 adsorbs, for example, viruses and bacteria in the air that were not adsorbed to the photocatalytic filter 83. At the plasma catalytic filter 84, the titanium dioxide, which is activated by the activators, destroys or inactivates, for example, the adsorbed bacteria and viruses.

### (APPARATUS FOR AND METHOD OF MANUFACTURING THE FIBERS THAT FORM THE FILTER)

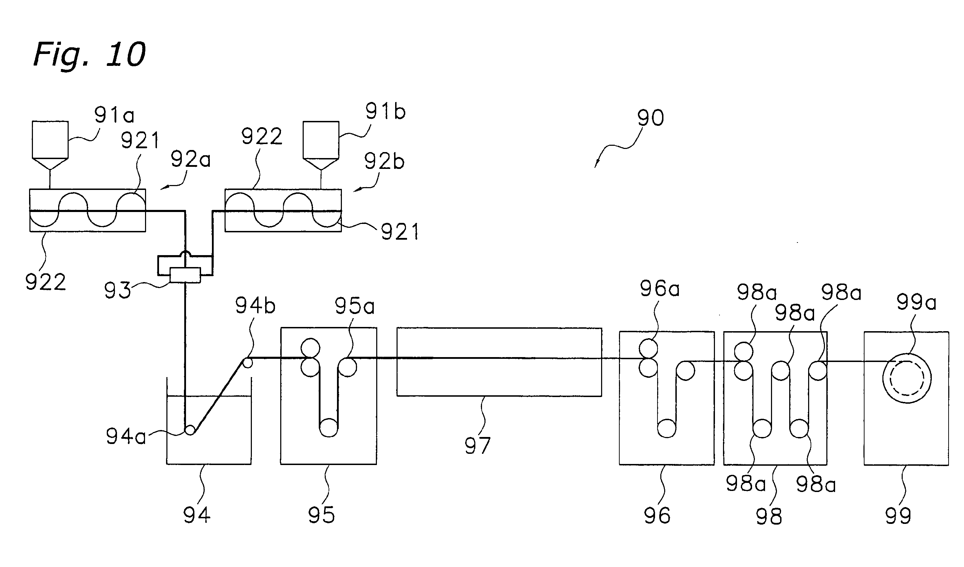

FIG 10 shows a melt spinning apparatus 90 for manufacturing the fibers that form the filters 81, 83, 84. As shown in FIG. 10, the melt spinning apparatus 90 principally comprises a first drying apparatus 91a, a second drying apparatus 91b, a first discharge apparatus 92a, a second discharge apparatus 92b, a discharge nozzle 93, a cooling apparatus 94, a payout apparatus 95, a drawing apparatus 96, a tunnel heater 97, a heat treatment apparatus 98, and a take-up apparatus 99.

Pellets of polypropylene resin that has a high melting point are supplied to the first drying apparatus 91a. Furthermore, those pellets are heated and dried at the first drying apparatus 91a until their moisture percentage content is below a predetermined value. Meanwhile, pellets of polypropylene resin, wherein the mixture 847 of the titanium dioxide particles 846 of the anatase form and the titanium apatite particles 845 (refer to FIG 9) is dispersed in advance, that has a low melting point are supplied to the second drying apparatus 91b. Furthermore, these pellets are heated and dried at the second drying apparatus 91b until their moisture percentage content is below a predetermined value.

The pellets that have been sufficiently dried in the first drying apparatus 91a are supplied to the first discharge apparatus 92a. The first discharge apparatus 92a principally comprises a heater (not shown), a screw 921, and a cylinder 922. At the first discharge apparatus 92a, the heater melts the pellets and the screw 921 moves the melted polypropylene (hereinbelow, referred to as molten PP) inside the cylinder 922 toward the discharge nozzle 93 side. Meanwhile, the pellets that have been sufficiently dried in the second drying apparatus 91 bare supplied to the second discharge apparatus 92b. Similar to the first discharge apparatus 92a, the second discharge apparatus 92b principally comprises a heater (not shown), a screw 921, and a cylinder 922. At the second discharge apparatus 92b, the heater melts the pellets and the screw 921 moves the melted mixture-containing polypropylene (hereinbelow, referred to as MX-containing molten PP) inside the cylinder 922 toward the discharge nozzle 93 side.

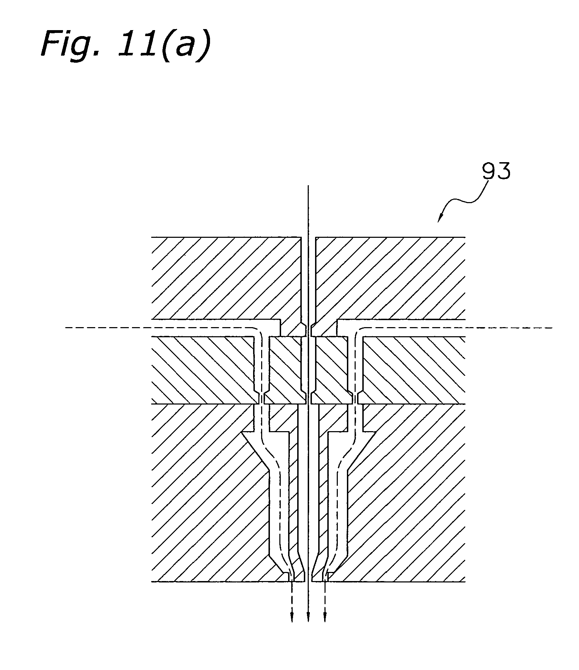

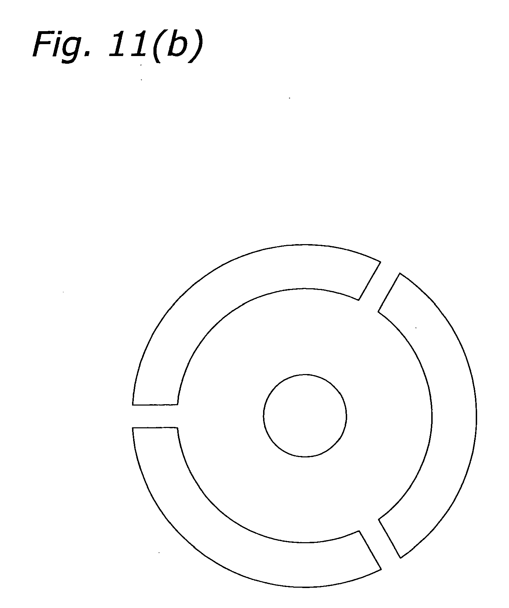

The molten PP and the MX-containing molten PP, which are supplied from the first discharge apparatus 92a and the second discharge apparatus 92b, are supplied to the discharge nozzle 93. The discharge nozzle 93 has a side sectional structure as shown in FIG. 11 (a) and a discharge port that is shaped as shown in FIG 11 (b). In the discharge nozzle 93, the molten PP flows through a first pathway (refer to the solid line arrow in FIG. 11(a)). Meanwhile, the MX-containing molten PP flows through a second pathway (refer to the broken arrows in FIG 11 (a)). Furthermore, the molten PP and the MX-containing molten PP are discharged from the discharge nozzle 93, integrated in a form so that the MX-containing molten PP covers the molten PP (hereinafter, the integrated molten PP and MX-containing molten PP is referred to as the composite melt), and then sent to the cooling apparatus 94.

The cooling apparatus 94 uses a coolant to cool and harden the composite melt, thereby forming a fiber (hereinafter, a fiber so formed is referred to as a composite fiber). Furthermore, the composite fiber is sent to the payout apparatus 95 via a dip roller 94a and a discharge roller 94b, which are disposed inside a tank of coolant.

The payout apparatus 95, which comprises payout rollers 95a, pays out the composite fiber to the tunnel heater 97 at a fixed speed. Meanwhile, the drawing apparatus 96, which comprises drawing rollers 96a, pulls the composite fiber, which exits from the tunnel heater 97, at a speed greater than the speed at which it is paid out from the payout apparatus 95. As a result, the composite fiber is heated and drawn between the payout apparatus 95 and the drawing apparatus 96. During this heating and drawing, a thin-film outer layer (the layer of the polypropylene resin that contains the mixture) of the composite fiber forms, and some of the encapsulated titanium dioxide particles 846 and titanium apatite particles 845 are exposed to the surface of that outer layer (hereinbelow, the fibers in this state are referred to as the photosemiconductor catalyst exposed fibers 844 (refer to FIG. 9)). The photosemiconductor catalyst exposed fibers 844 are subsequently guided to the heat treatment apparatus 98. The heat treatment apparatus 98 has a heater (not shown) that heats so that the interior of the heat treatment apparatus 98 reaches a prescribed temperature. At this heat treatment apparatus 98, the photosemiconductor catalyst exposed fibers 844 are heat treated while being moved along guide rollers 98a. This heat treatment proceeds to crystallize the core 842 of each photosemiconductor catalyst exposed fiber 844, the strength of the fiber 844 is maintained at a predetermined value or greater. Furthermore, the photosemiconductor catalyst exposed fibers 844 that exit from the heat treatment apparatus 98 are wound up by a take-up roller 99a of the take-up apparatus 99.

The photosemiconductor catalyst exposed fibers 844 manufactured by the process described above exhibit a shape as shown in FIG 9.

### (METHOD OF MANUFACTURING THE FILTERS)

The filters 81, 83, 84 are manufactured as nonwoven fabric by thermal fusing the photosemiconductor catalyst exposed fibers 844 without weaving them.

### (FEATURES OF THE PRESENT AIR CLEANER)

### (1)

With the air cleaner 40 according to the first embodiment, the airflow downstream side surface of the photosemiconductor catalyst supporting filter 831 is coated with a mixture of titanium dioxide particles of the anatase form, wherein the secondary particles are 0.1 to 1.0 µm in diameter, and titanium apatite particles, wherein the secondary particles are 1 to 10 µm in diameter. Here, the small-sized secondary particles of the titanium dioxide enter the gaps between the large-sized secondary particles of the titanium apatite, thereby creating active sites for photocatalytic reaction similar to those of conventional titanium dioxide. In addition, in this state, the titanium apatite specifically adsorbs bacteria and viruses. As a result, this photocatalytic filter 83 is capable of exhibiting cleaning capacity that is superior to that of a photocatalytic filter coated with a conventional photosemiconductor catalyst.

### (2)

With the air cleaner 40 according to the first embodiment, the PP fibers 844 of the plasma catalytic filter 84 support the mixture 847 of the titanium dioxide particles 846 of the anatase form, wherein the secondary particles are 0.1 to 1.0 µm in diameter, and the titanium apatite particles 845, wherein the secondary particles are 1 to 10 µm in diameter. Here, the small-sized secondary particles of the titanium dioxide enter the gaps between the large-sized secondary particles of the titanium apatite, thereby creating active sites for photocatalytic reaction similar to those of conventional titanium dioxide. In addition, in this state, the titanium apatite specifically adsorbs bacteria and viruses. As a result, these fibers 844 are capable of exhibiting cleaning capacity that is superior to that of fibers whereon a conventional photosemiconductor catalyst is supported.

### (3)

With the air cleaner 40 according to the first embodiment, each of the fibers 844 that constitute the plasma catalytic filter 84 comprises the core 842 and the enveloping layer 843, and the titanium dioxide particles 846 of the anatase form as well as the titanium apatite particles 845 are supported on the enveloping layer 843 so that they are exposed to the air side. Generally, if a resin is filled with, for example, particle filler, that resin has a strong tendency to embrittle. However, because each of the fibers 844 has a core 842, there is virtually no such risk. In addition, by exposing the titanium dioxide particles 846 and the titanium apatite particles 845 to the air side, they exhibit sufficient photocatalytic functioning.

### (4)

With the air cleaner 40 according to the first embodiment, the mixture ratio by weight of titanium dioxide particles of the anatase form, wherein the secondary particles are 0.1 to 1.0 µm in diameter, and titanium apatite particles, wherein the secondary particles are 1 to 10 µm in diameter, is 100:20, and this mixture is coated or supported on the filters 83, 84.

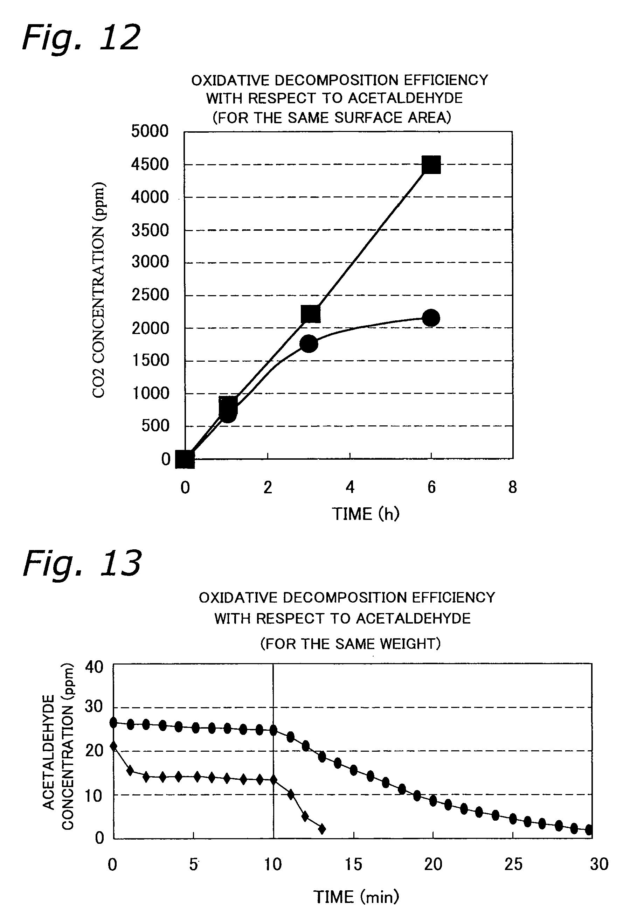

FIG 13 shows a graph that illustrates the oxidative decomposition efficiency of titanium dioxide and titanium apatite with respect to acetaldehyde for the case wherein the titanium dioxide particles 846 of the anatase form, wherein the secondary particles are 0.1 to 1.0 µm in diameter, and the titanium apatite particles 845, wherein the secondary particles are 1 to 10 µm in diameter, are of the same weight. In FIG. 13, the titanium oxide and the titanium apatite are not irradiated with ultraviolet light until ten minutes from the measurement start time have elapsed, and are irradiated thereafter. As is clear from the graph, the titanium dioxide oxidatively decomposes the acetaldehyde so that its concentration decreases by about 15 ppm approximately three minutes from the start of ultraviolet light irradiation; in contrast, after the elapse of as much as 20 minutes from the start of ultraviolet light irradiation, the titanium apatite gradually oxidatively decomposes the acetaldehyde so that its concentration decreases by approximately 24 ppm. Accordingly, the speed at which the titanium dioxide oxidatively decomposes the acetaldehyde is approximately 5.0 ppm/min. Moreover, the speed at which the titanium apatite oxidatively decomposes the acetaldehyde is approximately 1.2 ppm/min. Accordingly, the oxidative decomposition speed ratio of the titanium dioxide and the titanium apatite with respect to the acetaldehyde is approximately 1:0.24. Furthermore, based on this oxidative decomposition speed ratio and the adsorption performance of the titanium apatite with respect to the acetaldehyde, if 10-35 parts by weight of the apatite that has a photocatalytic function, wherein the secondary particles are 1 to 10 µm in diameter, are mixed with 100 parts by weight of the photosemiconductor catalyst, wherein the secondary particles are 0.1 to 1.0 µm in diameter, then it will lead to a result wherein the capacity to process, for example, bacteria and viruses is higher than the case wherein only titanium dioxide is used. Accordingly, these filters 83, 84 can exhibit a cleaning capacity that is superior to a filter whereon the titanium dioxide is supported as is.

### (MODIFIED EXAMPLE)

### (A)

With the air cleaner 40 according to the first embodiment, the photocatalytic function of the titanium apatite is activated by activators, but the photocatalytic function of, for example, titanium apatite or titanium dioxide may instead be activated by using, for example, an ultraviolet light lamp.

### (B)

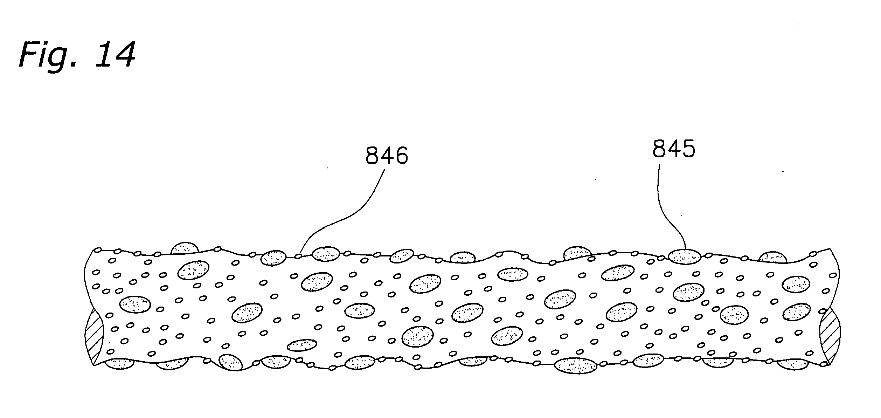

With the air cleaner 40 according to the first embodiment, fibers 844 are used, each of which has a core 842, as the fibers that constitute the plasma catalytic filter 84, but fibers may be used wherein the titanium dioxide particles 846 and the titanium apatite particles 845 are substantially uniformly dispersed internally as well, as shown in FIG 14. Note that some of the titanium dioxide particles 846 and the titanium apatite particles 845 are exposed to the fiber surface.

### (C)

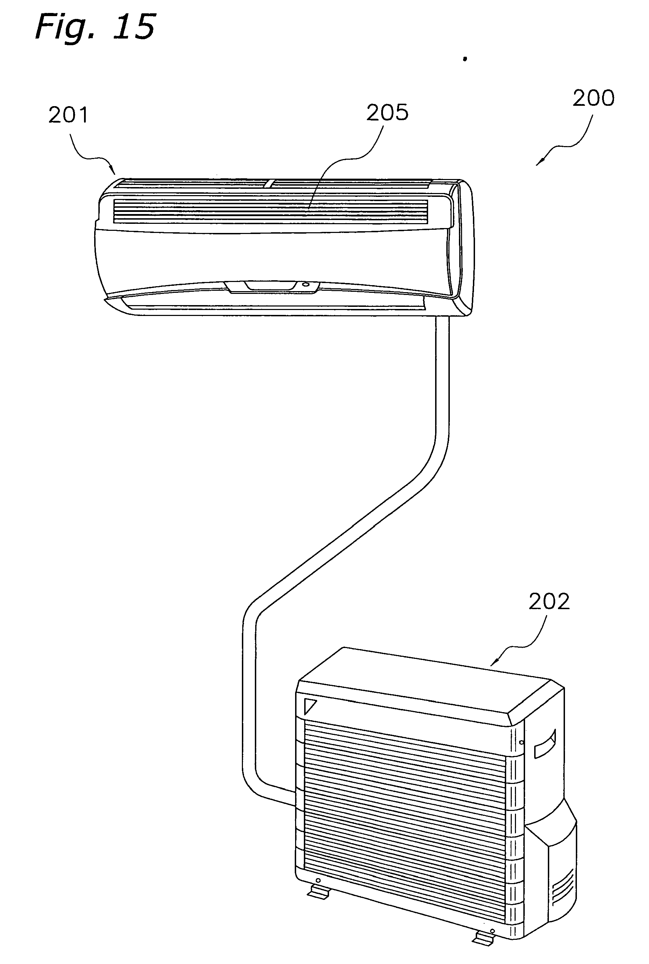

With the first embodiment, the present invention is adapted to the air cleaner 40, but may be adapted to an air conditioner 200 that performs cooling and heating, as shown in FIG 15.

The air conditioner 200 is a device for supplying conditioned air to an indoor space, and comprises an indoor unit 201, which is affixed to, for example, a wall surface of the indoor space, and an outdoor unit 202, which is installed in the outdoor space. A suction port 205 for taking the air of the indoor space into the air conditioner 200 is provided to the indoor unit 201, and the inner side of this suction port 205 is equipped with a filter unit (not shown). Also in the case wherein the present invention is adapted to this filter unit, viruses, fungi, microbes, and the like adhering and adsorbed to the filter unit are eliminated, which consequently suppresses the occurrence of, for example, offensive odor and air pollution.

### <SECOND EMBODIMENT>

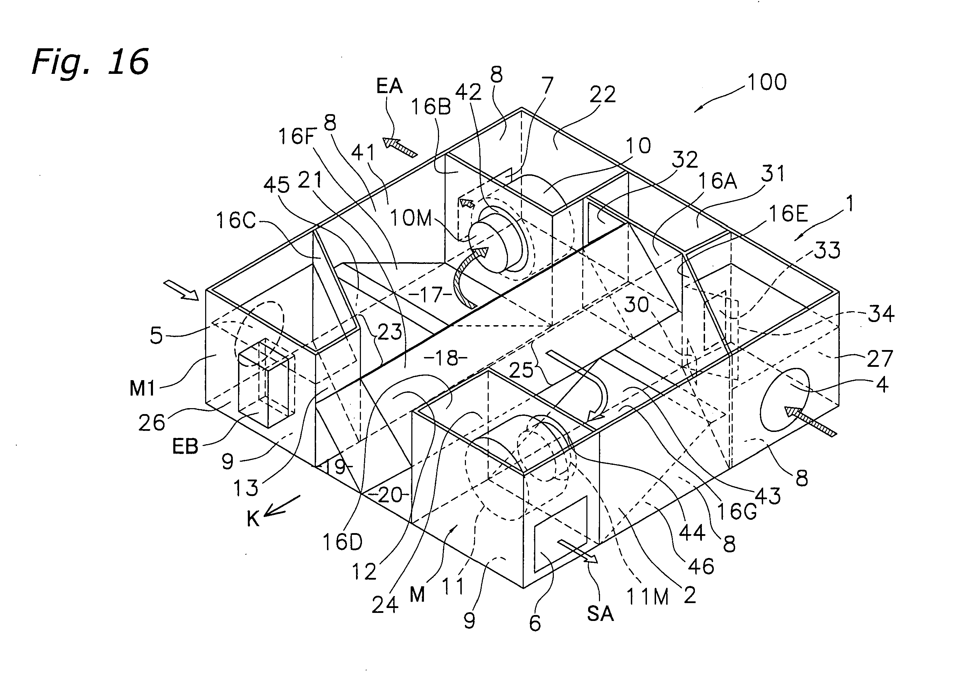

FIGS. 16, 17, 18, and 19 show an oblique view, a top view, a side view, and an exploded oblique view, respectively, of the internal structure of a total heat exchanging unit according to one embodiment of the present invention. Furthermore, as shown in FIG 16, a total heat exchanging unit 100 is an apparatus for ventilating an indoor space while exchanging heat between supply air SA (solid line outline arrow) from an outdoor space and exhaust air EA (hatched outline arrow) from the indoor space via a heat exchange element 12.

### (CONSTITUTION OF THE TOTAL HEAT EXCHANGING UNIT)

As shown in FIGS. 16, 17, 18, and 19, the present total heat exchanging unit 100 principally comprises a casing 1, a heat exchange element 12, air filters 12b, fans 10, 11, a damper 34, and an electrical equipment box EB.

### (CONSTITUENT ELEMENTS OF THE TOTAL HEAT EXCHANGING UNIT)

### (1) CASING

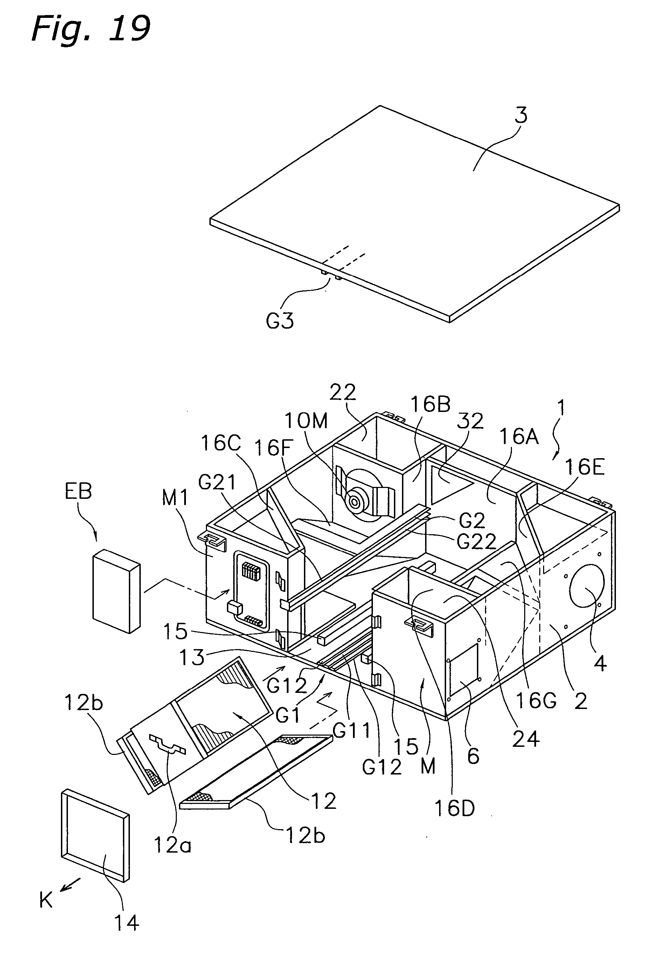

As shown in FIG 16 and FIG. 19, the casing 1 comprises a casing body 2 and a cover body 3, which covers the upper surface of the casing body 2. Furthermore, a heat exchange element chamber 21, an exhaust air fan motor housing chamber 41, an exhaust air fan housing chamber 22, a supply air fan motor housing chamber 43, a supply air fan housing chamber 24, a supply air communicating chamber 45, an exhaust air communicating chamber 46, an outdoor side suction chamber 26, an indoor side suction chamber 27, and a bypass chamber 31 are provided in the casing 1. The following describes the details of each of the chambers discussed above.

### A. HEAT EXCHANGE ELEMENT CHAMBER

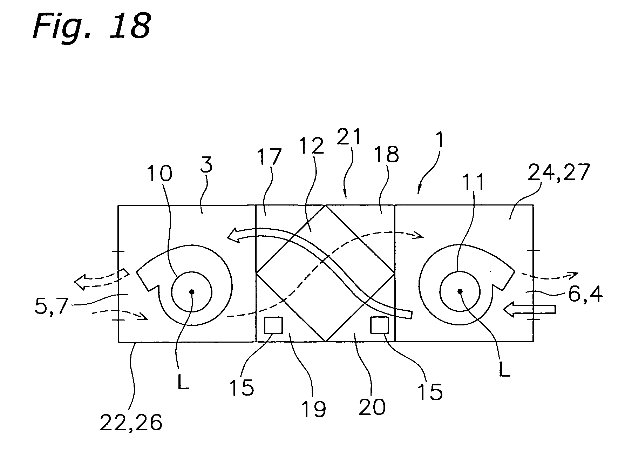

The heat exchange element chamber 21 is a rectangular parallelepipedic space, as shown in FIG. 16 and FIG 18, and houses the heat exchange element 12. Furthermore, the heat exchange element chamber 21 is formed so that it is partitioned by, for example, a bottom plate of the casing body 2, partition plates 16A-16E (refer to FIGS. 16, 20, and 21), and the cover body 3. In addition, guide parts G1, G2, G3 are affixed to the bottom plate of the casing body 2, the partition plates 16A-16E, and the cover body 3, respectively. The guide part G1, which is affixed to the bottom plate of the casing body 2, comprises a first guide part G11 and second guide parts G12. The first guide part G11 guides the ridgeline of the lower part of the heat exchange element 12 when the heat exchange element 12 is inserted or removed. Moreover, a pair of second guide parts G12 is disposed so that the first guide part G11 is interposed therebetween, and guides the end edges of the pair of air filters 12b. The guide part G2, which is affixed to the partition plates 16A-16E, comprises a first guide part G21 and a second guide part G22. The first guide part G21 guides a ridgeline of a side part of the heat exchange element 12 when the heat exchange element 12 is inserted or removed. Moreover, the second guide part G22 guides the end edges of the air filters 12b. The guide part G3, which is affixed to the cover body 3, guides a ridgeline of an upper part of the heat exchange element 12 when the heat exchange element 12 is inserted or removed.

Furthermore, housing the heat exchange element 12 in the heat exchange element chamber 21 creates four substantially triangular prism shaped spaces 17, 18, 19, 20 therein. Hereinbelow, the spaces indicated by reference symbols 17, 18, 19, and 20 in FIG 16 and FIG. 18 are called a first space, a second space, a third space, and a fourth space, respectively.

### B. EXHAUST AIR FAN HOUSING CHAMBER

The exhaust air fan housing chamber 22 houses the exhaust air fan 10, as shown in FIG 16 and FIG 19. In addition, as shown in FIG 16, the exhaust air fan housing chamber 22 communicates with the exhaust air fan motor housing chamber 41 via an opening 42, which is formed in the partition plate 16B. In addition, as shown in FIG. 16, the exhaust air fan housing chamber 22 comprises an exhaust air outdoor side blow out port 7 on its side wall.

### C. EXHAUST AIR FAN MOTOR HOUSING CHAMBER

The exhaust air fan motor housing chamber 41 houses an exhaust air fan motor 10M, as shown in FIG. 16 and FIG. 19. In addition, the exhaust air fan motor housing chamber 41 communicates with the first space 17 via an opening 23, which is partitioned by the cover body 3 and one of the ridgelines of the heat exchange element 12, as shown in FIG. 16.

### D. SUPPLY AIR FAN HOUSING CHAMBER

The supply air fan housing chamber 24 houses the supply air fan 11, as shown in FIG. 16 and FIG. 19. In addition, the supply air fan housing chamber 24 communicates with the supply air fan motor housing chamber 43 via an opening 44, which is formed in the partition plate 16D, as shown in FIG 16. In addition, the supply air fan housing chamber 24 comprises a supply air indoor side blow out port 6 on its side wall, as shown in FIG. 16.

### E. SUPPLY AIR FAN MOTOR HOUSING CHAMBER

The supply air fan motor housing chamber 43 houses a supply air fan motor 11M, as shown in FIG. 16 and FIG. 19. In addition, the supply air fan motor housing chamber 43 communicates with the second space 18 via an opening 25, which is partitioned by the cover body 3 and one of the ridgelines of the heat exchange element 12.

### F. OUTDOOR SIDE SUCTION CHAMBER

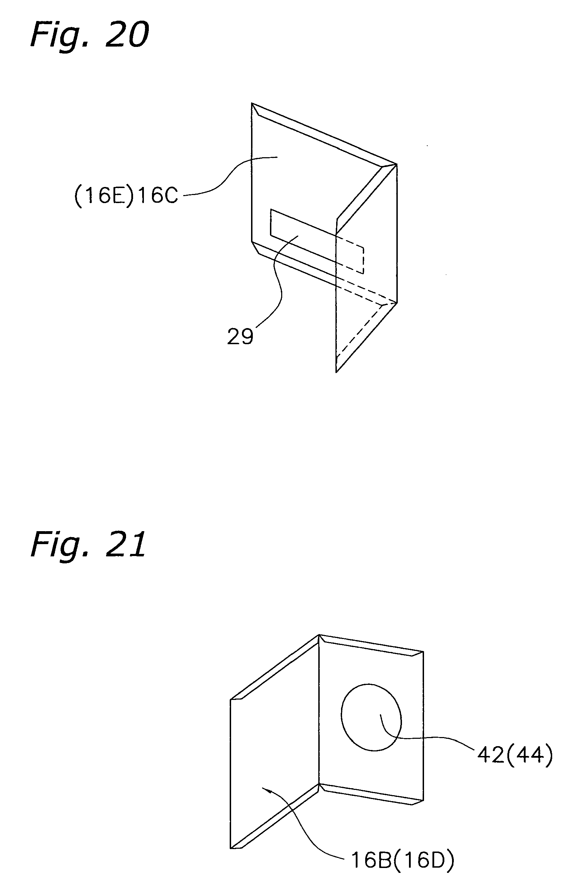

The outdoor side suction chamber 26 comprises a supply air outdoor side suction port 5 on its side wall, as shown in FIG. 16. In addition, the outdoor side suction chamber 26 communicates with the supply air communicating chamber 45 via an opening 29 of the partition plate 16C, as shown in FIG 16 and FIG 20.

### G. INDOOR SIDE SUCTION CHAMBER

The indoor side suction chamber 27 comprises an exhaust air indoor side suction port 4 on its side wall, as shown in FIG. 16. In addition, the indoor side suction chamber 27 communicates with the exhaust air communicating chamber 46 via an opening 30 of the partition plate 16E, as shown in FIG. 16.

### H. SUPPLY AIR COMMUNICATING CHAMBER

The supply air communicating chamber 45 is partitioned by the partition plate 16F, and is positioned below the exhaust air fan motor housing chamber 41. In addition, the supply air communicating chamber 45 communicates with the third space 19, as shown in FIG. 16.

### I. EXHAUST AIR COMMUNICATING CHAMBER

The exhaust air communicating chamber 46 is partitioned by the partition plate 16G, and is positioned below the supply air fan motor housing chamber 43. In addition, the exhaust air communicating chamber 46 communicates with the fourth space 20, as shown in FIG. 16.

### J. BYPASS CHAMBER

The bypass chamber 31 is positioned on the side opposite an extraction direction K of the heat exchange element chamber 21. Furthermore, the bypass chamber 31 communicates with the first space 17 via an opening 32. In addition, the bypass chamber 31 communicates with the indoor side suction chamber 27 via an opening 33. As a result, the exhaust air fan housing chamber 22 and the indoor side suction chamber 27 communicate via the exhaust air fan motor housing chamber 41, the first space 17, and the bypass chamber 31.

### (2) HEAT EXCHANGE ELEMENT

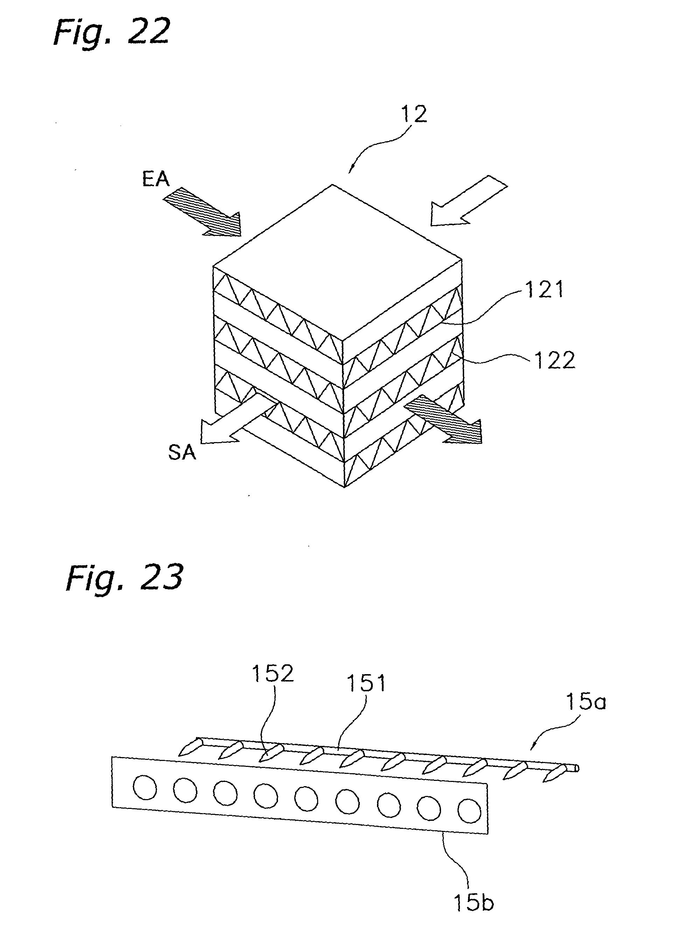

The heat exchange element 12 is formed substantially as a rectangular parallelepiped, as shown in FIG. 16 and FIG. 19, and is provided to the intersecting portion between an exhaust air passageway 8 and a supply air passageway 9. The heat exchange element 12 has a laminar structure, wherein special pleated kraft paper (hereinbelow, referred to as spacer paper) 122 and special flat sheet shaped kraft paper (hereinbelow, referred to as partitioning paper) 121 are stacked in alternating directions, as shown in FIG. 22. Because the heat exchange element 12 is so structured, passageways in the heat exchange element 12 for the exhaust air EA and the supply air SA are disposed so that they alternate by level. Furthermore, with the heat exchange element 12, the sensible heat and the latent heat of the supply air SA and the exhaust air EA are exchanged via the partitioning paper 121. The spacer paper 122 and the partitioning paper 121 are coated with a mixture of titanium dioxide particles of an anatase form and titanium apatite particles, the same as the photocatalytic filter of the first embodiment.

Furthermore, a handle 12a for removing the heat exchange element 12 is provided to an end surface of the heat exchange element 12, which can be inserted or removed in the longitudinal direction along its long side via an insertion/removal opening 13, which is open to a maintenance surface M of the casing 1, by removing a cover 14 as shown in FIG. 19.

### (3) AIR FILTER

As shown in FIG 19, the air filters 12b are affixed to the heat exchange element 12 so that they cover the surfaces of the heat exchange element 12 that contact the third space 19 and the fourth space 20. Each of the air filters 12b is a nonwoven fabric that is made of polytetrafluoroethylene fibers. Furthermore, the air filters 12b principally catch comparatively large particles of dust, and cannot capture fine bioparticles, such as bacteria, viruses and the like.

### (4) STREAMER DISCHARGER

A streamer discharger 15 is provided in the third space 19 and another is provided in the fourth space 20, and each one activates the photocatalytic function of the titanium apatite, which is supported inside the heat exchange element 12, by supplying activators, such as high speed electrons, ions, ozone, and radicals like hydroxy radicals, as well as other excited molecules (such as excited oxygen, nitrogen, and water molecules), to the inside of the heat exchange element 12. Each of the streamer dischargers 15 comprises a discharge electrode 15a and an opposing electrode 15b. The discharge electrode 15a comprises an electrode rod 151 and a plurality of needle electrodes 152, as shown in FIG. 23. Furthermore, the needle electrodes 152 are fixed so that they are substantially orthogonal to the electrode rod 151. The opposing electrode 15b is a plate shaped electrode and comprises a plurality of openings, wherethrough air passes in the surface normal direction. Furthermore, the electrode rod 151 of the discharge electrode 15a and the opposing electrode 15b are disposed substantially parallel to one another. As a result, each of the needle electrodes 152 of the discharge electrode 15a forms a substantially right angle with the opposing electrode 15b. In addition, the discharge electrode 15a and the opposing electrode 15b are connected to a high voltage power supply (not shown) that supplies direct current, alternating current, or pulsed electricity. Furthermore, if an electrical discharge voltage is impressed upon the discharge electrode 15a and the opposing electrode 15b, a streamer discharge is generated between the needle electrodes 152 of the discharge electrode 15a and the opposing electrode 15b. In so doing, low temperature plasma is generated in the electrical discharge field when the streamer discharge occurs. Furthermore, this low temperature plasma generates high speed electrons, ions, ozone, and radicals, such as hydroxy radicals, as well as other excited molecules (such as excited oxygen, nitrogen, and water molecules). Furthermore, these activators are carried along with the airflow, pass through the openings of the opposing electrode 15b, and are supplied to the heat exchange element 12.

Furthermore, the streamer discharger 15 is energized only in a heat exchange element cleaning mode, which is discussed later.

### (5) FAN

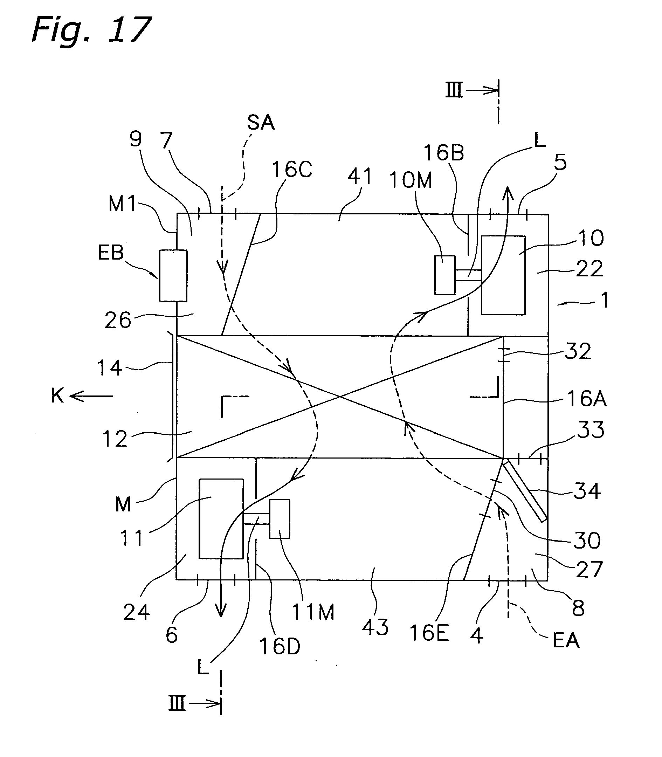

The exhaust air fan 10 and the supply air fan 11 are sirocco fans (rotors), as shown in FIG 17 and FIG. 18, and are housed inside a curled fan casing (not shown) that is made of a resin foam (e.g., expanded polystyrene). Furthermore, a rotational axis line L of each of the fans 10, 11 is parallel to the extraction direction K of the heat exchange element 12.

### (6) DAMPER

The damper 34 is disposed inside the indoor side suction chamber 27. The damper 34 is pivoted by, for example, an electric motor (not shown) that opens either the opening 30 or the opening 33 and blocks the other.

### (7) ELECTRICAL EQUIPMENT BOX

The electrical equipment box EB is disposed in a portion M1, which opposes the exhaust air fan 10, of the maintenance surface M. The electrical equipment box EB houses electrical equipment, such as a control circuit board (not shown). Furthermore, the control circuit board is connected to and in communication with a wired remote control (not shown), and controls the operation of the fans 10, 11 and the damper 34 based on signals sent from the wired remote control.

### (SUPPLY AIR AND EXHAUST AIR FLOWS)

The total heat exchanging unit 100 is provided with three operation modes, i.e., a total heat exchange ventilation mode, a normal ventilation mode, and the heat exchange element cleaning mode. The following describes the details of each of these operation modes.

### (1) TOTAL HEAT EXCHANGE VENTILATION MODE

With the total heat exchanging unit 100, if total heat exchange ventilation is performed using the heat exchange element 12, then the damper 34 opens the opening 30. Furthermore, as discussed above, the opening 33 is blocked at this time. Furthermore, if the fans 10, 11 are operated in this state, the indoor air is suctioned via a duct from the indoor side suction port 4 into the indoor side suction chamber 27, passes through the exhaust air passageway 8, which extends from the opening 30 to the exhaust air communicating chamber 46, the fourth space 20, the air filters 12b, the heat exchange element 12, the first space 17, the opening 23, the exhaust air fan motor housing chamber 41, and the exhaust air fan housing chamber 22, and is then blown out from the outdoor side blow out port 7 and exhausted to the outdoor space via a duct; simultaneously, the outdoor air is suctioned via a duct from the outdoor side suction port 5 into the outdoor side suction chamber 26, passes through the supply air passageway 9, which extends from the supply air communicating chamber 45 to the third space 19, the air filters 12b, the heat exchange element 12, the second space 18, the opening 25, the supply air fan motor housing chamber 43, the opening 44, and the supply air fan housing chamber 24, and is then blown out from the indoor side blow out port 6 and supplied via a duct to the indoor space.

### (2) NORMAL VENTILATION MODE

Normal ventilation, which does not perform heat exchange, is performed during intermediate seasons, such as spring and fall, when cooling and heating are not needed.

When normal ventilation is performed with the total heat exchanging unit 100, the damper 34 opens the opening 33. Furthermore, as discussed above, the opening 30 is blocked at this time. Furthermore, if the fans 10, 11 are operated in this state, the indoor air is suctioned via a duct from the indoor side suction port 4 into the indoor side suction chamber 27, passes through a bypass ventilation passageway, which extends from the opening 33 to the bypass chamber 31, the opening 32, the first space 17, the opening 23, exhaust air fan motor housing chamber 41, and the exhaust air fan housing chamber 22, and is then blown out from the outdoor side blow out port 7 and exhausted via a duct to the outdoor space; simultaneously, the outdoor air is suctioned via a duct from the outdoor side suction port 5 into the outdoor side suction chamber 26, passes through the supply air passageway 9, which extends from the supply air communicating chamber 45 to the third space 19, the air filters 12b, the heat exchange element 12, the second space 18, the opening 25, the supply air fan motor housing chamber 43, the opening 44, and the supply air fan housing chamber 24, and is then blown out from the indoor side blow out port 6 and supplied via a duct to the indoor space (the flow of the supply air is the same as for the case of total heat exchange ventilation).

### (3) HEAT EXCHANGE ELEMENT CLEANING MODE

In the heat exchange element cleaning mode, control is performed so that the rotational speed of the fans 10, 11 reaches a state wherein the amount of ventilation is minimized as much as possible; simultaneously, the streamer dischargers 15 are energized.

### (FEATURES OF THE TOTAL HEAT EXCHANGING UNIT)

With the total heat exchanging unit 100 according to the second embodiment, the heat exchange element 12 is coated with a mixture of titanium dioxide particles of the anatase form, wherein the secondary particles are 0.1 to 1.0 µm in diameter, and titanium apatite, wherein the secondary particles are 1 to 10 µm in diameter. Here, the small-sized secondary particles of the titanium dioxide enter the gaps between the large-sized secondary particles of the titanium apatite. Accordingly, active sites for photocatalytic reaction can be created that are similar to those of conventional titanium dioxide. In addition, in this state, the titanium apatite specifically adsorbs bacteria and viruses. As a result, the total heat exchanging unit 100 can exhibit cleaning capacity that is superior to that of a total heat exchanging unit that uses a conventional photosemiconductor catalyst.

### (MODIFIED EXAMPLE)

With the total heat exchanging unit 100 according to the second embodiment, the heat exchange element 12 is coated with a mixture of titanium dioxide particles of the anatase form, wherein the secondary particles are 0.1 to 1.0 µm in diameter, and titanium apatite, wherein the secondary particles are 1 to 10 µm in diameter; however, in addition thereto, the same mixture may be coated on one or both sides of the air filters.

### INDUSTRIAL APPLICABILITY

A cleaning treatment material according to the present invention can exhibit cleaning capacity superior to that of a conventional photosemiconductor catalyst, and can be adapted to cleaning related technologies, such as those that use air or water.

## Claims

1. A cleaning treatment material (847), comprising:
a mixture of:
a photosemiconductor catalyst (846), wherein the secondary particles are 0.1 to 1.0 µm in diameter; and
an apatite (845) that has a photocatalytic function, wherein the secondary particles are 1 to 10 µm in diameter.

2. A cleaning treatment material (847) as recited in Claim 1, wherein
10-35 parts by weight of the apatite (845), which has said photocatalytic function, are mixed with 100 parts by weight of said photosemiconductor catalyst (846).

3. A cleaning treatment material (847) as recited in Claim 1 or Claim 2, wherein
said photosemiconductor catalyst is titanium dioxide (846).

4. A cleaning treatment material (847) as recited in Claim 1 or Claim 2, wherein
the apatite, which has said photocatalytic function, is titanium apatite (845).

5. An air filter (84), wherein
said air filter (84) supports the cleaning treatment material (847) as recited in any one claim of Claim 1 through Claim 4.

6. An air conditioner (40), comprising:
an air filter (84) as recited in Claim 5.

7. A heat exchange element (12), wherein
said heat exchange element (12) supports a cleaning treatment material (847) as recited in any one claim of Claim 1 through Claim 4.

8. A heat exchanging unit (100), comprising:
a heat exchange element (12) as recited in Claim 7.
